Europäisches Patentamt

European Patent Office

Office européen des brevets

(19)

(11) Veröffentlichungsnummer: **0 264 018**
**A1**

(12) **EUROPÄISCHE PATENTANMELDUNG**

(21) Anmeldenummer: 87114211.3

(22) Anmeldetag: 29.09.87

(51) Int. Cl.⁴: **H04M 1/10**

(30) Priorität: 30.09.86 DE 3633232

(43) Veröffentlichungstag der Anmeldung:
20.04.88 Patentblatt 88/16

(84) Benannte Vertragsstaaten:
DE FR GB IT NL SE

(71) Anmelder: **Siemens Aktiengesellschaft Berlin und München**
**Wittelsbacherplatz 2**
**D-8000 München 2(DE)**

(72) Erfinder: **Navratil, Emil, Dr.**
**Wemdinger Strasse 38**
**D-8000 München 80(DE)**
Erfinder: **Doll, Armin, Dipl.-Ing.**
**St.-Veit-Strasse 28**
**D-8000 München 80(DE)**

(54) **Verfahren zur Verstärkungsregelung in Fernsprechapparaten mit elektronischer Sprechschaltung und Vorrichtung zur Durchführung des Verfahrens.**

(57) Um bei Fernsprechapparaten mit elektronischer Sprechschaltung eine Signalbegrenzung durch Übersteuerung ohne gleichzeitige Beschränkung des Aussteuerungsbereichs zu verhindern, werden Signale (AS1, AS2, NGS, PGS) erzeugt, die das augenblickliche Leitungssignale (AS1, AS2) und Grenzwerte (NGS, PGS) für die Aussteuerungsgrenzen charakterisieren. Durch Vergleich (DN, DP) der Signale (AS1, AS2, NGS, PGS) wird bei Erreichen der Aussteuerungsgrenzen mit Hilfe einer Regeleinrichtung (SL; OR, D, SG, RZ, CZ) die Verstärkung des Mikrophonverstärkers (SMV) zurückgeregelt.

FIG 2

EP 0 264 018 A1

## Verfahren zur Verstärkungsregelung in Fernsprechapparaten mit elektronischer Sprechschaltung und Vorrichtung zur Durchführung des Verfahrens.

Die Erfindung betrifft ein Verfahren gemäß dem Oberbegriff des Patentanspruchs 1 und eine Vorrichtung zur Durchführung des Verfahrens.

Bei Fernsprechapparaten mit elektronischer Sprechschaltung kann es bei hohen Mikrophon-Sendepegeln oder ungünstigen Speise-und Lastbedingungen, z.B. bei kleinen Speiseströmen oder extremen Lastimpedanzen, zu Signalbegrenzungen durch Übersteuerung kommen, die einen großen Anstieg der Signalverzerrung zur Folge haben.

Zur Verhinderung von Übersteuerungen ist es üblich, die maximale Amplitude des Leitungssignals an der Telefonleitung unter Berücksichtigung ungünstiger Betriebsbedingungen auf einen festen Wert zu begrenzen. Dabei werden entweder die Amplitudenspitzen des Leitungssignals symmetrisch durch eine bei höherer Amplitude kontinuierlich stärker wirkende Begrenzung unter dem maximalen Amplitudenwert gehalten oder die Sendeverstärkung wird bei Überschreitung eines vorgewählten Sendepegels zurückgenommen.

Beide Lösungen haben den Nachteil, daß die vorgewählten Maximalpegel der Amplitude Festwerte darstellten, die von den jeweils in Frage kommenden ungünstigen Betriebsbedingungen festgelegt sind. Dadurch wird einerseits im Normalbetrieb, d.h. bei günstigeren Speise-und Lastbedingungen, der mögliche Aussteuerungsbereich nicht voll ausgenutzt. Andererseits ist eine Übersteuerung der Sprechschaltung unter besonders ungünstigen Betriebsbedingungen nicht völlig auszuschließen. Eine Begrenzung der Amplitudenspitzen hat den weiteren Nachteil, daß das Leitungssignal im Vergleich zum Mikrophonsignal eine verringerte Dynamik und nicht zu vernachlässigende Oberwellenanteile aufweist.

Der Erfindung liegt die Aufgabe zugrunde, ein Verfahren zur Verstärkungsregelung für Fernsprechapparate mit elektronischer Sprechschaltung anzugeben, bei dem eine durch Übersteuerung mögliche Signalbegrenzung verhindert wird. Ferner liegt der Erfindung die Aufgabe zugrunde, eine Vorrichtung zur Durchführung dieses Verfahrens anzugeben.

Diese Aufgaben werden durch die Merkmale der kennzeichnenden Teile der Patentanprüche 1 und 10 gelöst.

Die Erfindung hat den Vorteil, daß der von den Speise-und Lastbedingungen bestimmte maximal mögliche Aussteuerungsbereich immer optimal ausgenutzt werden kann, weil der Signalpegel aufgrund der Regelung diesen Bereich nicht verlassen kann.

Weitere Ausgestaltungen des Erfindungsgedankens sind in Unteransprüchen gekennzeichnet.

Die Erfindung wird im folgenden anhand von in den Figuren der Zeichnung dargestellten Ausführungsbeispielen näher erläutert. Es zeigt:

Fig. 1 ein schematisches Schaltbild einer Telefonanlage,

Fig. 2 ein schematisches Schaltbild einer erfindungsgemäßen Vorrichtung,

Fig. 3 ein Schaltbild einer konkreten Ausführungsform der Schaltung nach Fig. 2 und

Fig. 4 eine detaillierte Teilschaltung der Schaltung nach Fig. 3.

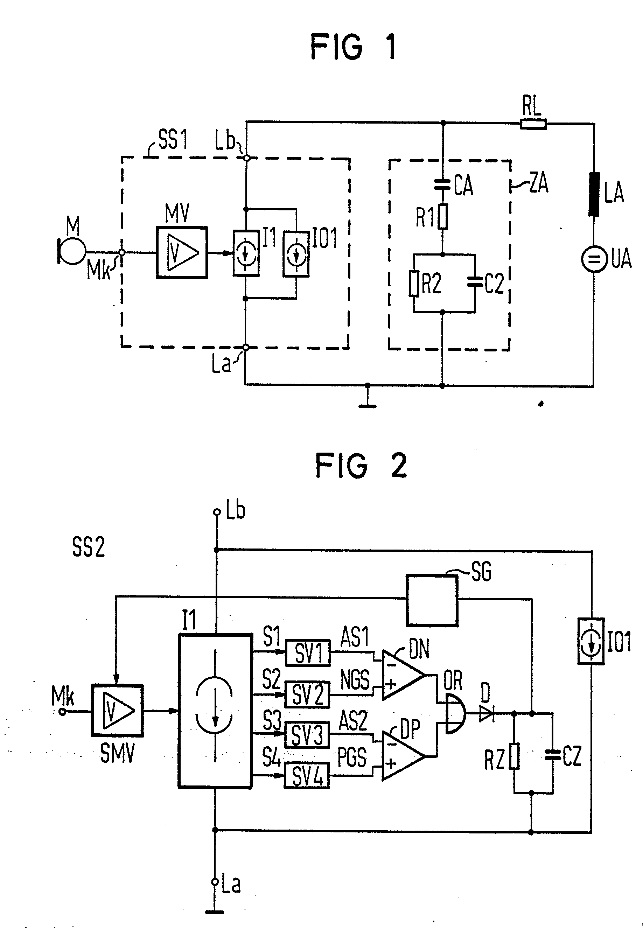

Gemäß Fig. 1 ist schematisch der Anschluß eines Teilnehmers mit einer Sprechschaltungsanordnung SS1 über die Anschlußklemmen La und Lb an eine Telefonleitung zur Amtsspeisung dargestellt. Der Einfachheit halber zeigt Fig. 1 eine asymmetrische Speise-und Leitungsdarstellung. Die Sprechschaltungsanordnung SS1 enthält den Mikrophonverstärker MV, der eingangsseitig über die Mikrophonklemme Mk an das Mikrophon M angeschlossen wird und der ausgangsseitig die Modulationsstromquelle I1 steuert. Parallel zu I1 liegt die Ruhestromquelle I01, durch die ein für die Erhaltung der Funktionsfähigkeit der Sprechschaltungsanordnung SS1 erforderlicher Gleichstrom fließt.

Die Sprechschaltungsanordnung SS1 ist über eine durch den äquivalenten Leitungswiderstand RL symbolisierte Telefonleitung mit dem Amt verbunden, das durch die Speisespannungsquelle UA und die Induktivität LA dargestellt ist. Parallel zur Serienschaltung aus UA, LA, RL liegt das Netzwerk ZA, das die Impedanz der Leitung symbolisiert, die die Sprechschaltungsanordnung SS1 an den beiden Klemmen La, Lb "sieht". Die Impedanz ZA enthält die Serienschaltung einer Kapazität CA, eines Widerstandes R1 und einer Parallelschaltung aus den Elementen R2, C2. In dem Erstzschaltbild gemäß Fig. 1 bedeutet die Induktivität LA, daß der Leitungswiderstand RL nur durch das Gleichstromverhalten der Anordnung beeinflußt wird und die Kapazität CA bedeutet, daß die komplexe Impedanz ZA nur das Wechselstromverhalten der Anordnung beeinflußt. Die Größe des Leitungsstromes der Telefonleitung ist abhängig von der Amtsspannung UA, dem Amtswiderstand, dem DC-Leitungswiderstand RL und dem DC-Teilnehmerwiederstand.

Die als Stromsenke gezeichnete Modulationsstromquelle I1 der Sprechschaltungsanordnung SS1 erzeugt einen DC-Stromwert, der der Differenz des Leitungsstromes der Telefonleitung und der Ruhestromquelle I01 entspricht. Diesem Gleichstrom wird bei einer Ansteuerung der Modulationsstromquelle I1 mit dem Mikrophon M bzw. dem Mikrophonverstärker MV ein Wechselstrom überlagert.

Aus dem Schaltbild gemäß Fig. 1 lassen sich die Grenzen des linearen Aussteuerungsbereichs ableiten.

Die elektronische Sprechschaltungsanordnung SS1, die das Leitungssignal als einen vom Mikrophon M modulierten Senkenstrom der Modulationsstromquelle I1 erzeugt, hat den Maximalwert des Leitungssignals dann erreicht, wenn ein weiterer Spannungsanstieg an den Klemmen La und Lb durch Verringerung des Stroms durch I1 nicht mehr möglich ist. Dieser Maximalwert hängt ab von der Spannung der Spannungsquelle UA sowie von der effektiven Lastimpedanz, die sich nach Fig. 1 aus dem Widerstand RL und der Impedanz ZA zusammensetzt. Dieser Grenzwert, bei dem der Modulationsstrom durch I1 im Extremfall gleich Null ist, wird als positiver Grenzwert bezeichnet.

Ein zweiter Grenzwert, der als negativer Grenzwert bezeichnet wird, ergibt sich aus der Tatsache, daß die elektronische Sprechschaltungsanordnung SS1 an ihren Ausgangsklemmen La und Lb bei voller Aussteuerung eine Mindestspannung benötigt, z.B. die Sättigungsspannung eines Transistors, die beispielsweise bei einer Spannungsänderung auf der Telefonleitung unterschritten werden kann.

Erfindungsgemäß werden von einer elektronischen Sprechschaltung Meßsignale und Grenzwertsignale erzeugt, die das augenblickliche Leitungssignal und Grenzwerte für die Aussteuerungsgrenzen charakterisieren. Die Vergleich der Signale wird bei Erreichen der Aussteuerungsgrenzen mit Hilfe einer Regeleinrichtung die Verstärkung des Mikrophon verstärkers zurückgeregelt. Die Art dieser Signale, d.h. ob Strom-oder Spannungssignale, sowie die Art und Weise ihrer Erzeugung hängen von der jeweiligen Ausführungsform der Sprechschaltungsanordnung ab; sie können mit den in der Technik geläufigen Mitteln erzeugt werden. Die Signale für die positiven und negativen Grenzwerte können fest oder abhängig vom Strom-oder Spannungszustand der Telefonleitung sein, falls die die Aussteuerungsgrenzen charakterisierenden Grenzwerte der Sprechschaltungsanordnung abhängig vom Strom-oder Spannungszustand der Telefonleitung sind.

Bei einer erfindungsgemäßen Sprechschaltung SS2 gemäß dem schematischen Schaltbild der Figur 2, bei dem gleiche Elemente wie in Fig. 1 mit gleichen Bezugszeichen versehen sind, steuert ein eingangsseitig mit der Mikrophonklemme Mk verbundene steuerbaren Mikrophonverstärker SMV ausgangsseitig die Modulationsstromquelle I1. Die Modulationsstromquelle I1 ist ausgangsseitig mit den Klemmen La und Lb zum Anschluß an die Telefonleitung verbunden. Ebenso wie in Figur 1 ist die Ruhestromquelle I01 an die Klemmen La und Lb angeschlossen.

Je nach einer dem Fachmann geläufigen und an sich bekannten Ausgestaltung der Modulationsstromquelle I1 werden von dieser Modulationsstromquelle Signale S1 bis S4 abgeleitet und herausgeführt. Nach einer Umformung durch die zugeordneten Signalverarbeitungseinrichtungen SV1 bis SV4 erlauben die Signale S1 uns S2 eine Detektion der negativen Begrenzung durch den Komparator oder Differenzverstärker DN und die Siganle S3 und S4 eine Detektion der positiven Begrenzung durch den Komparator oder Differenzverstärker DP. Diese Detektion der Begrenzung erfolgt dadurch, daß aus den Signalen S1 und S3 durch Umformung augenblickliche Leitungssignale AS1 und AS2 gebildet werden, die den augenblicklichen elektrischen Zustand der Modulationsstromquelle charakterisieren, und daß aus den Signalen S2 und S4 nach Umformung Grenzwertsignale NGS und PGS gebildet werden, die die maximal erlaubten Zustände charakterisieren, d.h. die dem negativen bzw. dem positiven Grenzwert des Aussteuerungsbereiches entsprechen. Die Signale AS1 und NGS nun im Komparator DN und die Signale AS2 und PGS im Komperator DP jeweils miteinander verglichen.

Die Ausgänge der beiden Komperatoren DN und DP werden einer Regeleinrichtung zugeführt, die über ein ODER-Glied OR, eine Diode D und ein Stellglied SG die Verstärkung des steuerbaren Mikrophonverstärkers SMV regelt. Das ODER-Glied OR wird von den Ausgängen der beiden Komperatoren DN und DP gesteuert. Zwischen der Diode D und dem Stellglied SG ist in der Regel noch ein Zeitverzögerungsglied angeordnet, das gemäß Fig. 2 beispielsweise aus einem Widerstand RZ und einem Kondensator CZ bestehen kann.

Erreichen die augenblicklichen Leitungssignale AS1 oder AS2 die durch die Grenzwertsignale NGS oder PGS charakterisierten negativen oder positiven Grenzwerte des Aussteuerungsbereichs, so steuern die Komparatoren DN oder DP die Reglereinrichtung derart an, daß die Verstärkung des steuerbaren Mikrophonverstärkers SMV zurückgeregelt wird. Umgekehrt wird die Verstärkung des steuerbaren Mikrophonverstärkers SMV wieder erhöht, sobald die augenblicklichen Leitungssignale AS1 und AS2 die jeweils zugeordneten Grenzwertsignale NGS und PGS wieder unterschreiten.

Die Verstärkung des steuerbaren Mikrophonverstärkers SMV hängt von der Spannung am Kondensator CZ ab. Bei leerem bzw. entladenen Kondensator CZ weist der steuerbare Mikrophonverstärker SMV eine maximale Verstärkung auf. Mit zunehmender Ladung an CZ reduziert sich die Verstärkung von SMV. Die Verstärkung kann dabei jeden beliebigen Wert zwischen Null und der Maximalverstärkung annehmen. Die Funktion der Schaltung gem. Fig. 2 wird am Beispiel des positiven Grenzwertes erläutert. Wird durch starke Ansteuerung des steuerbaren Mikrophonverstärkers und ungünstige Impedanzbedinungen der positive Grenzwert PGS überschritten, so liefert der Komparator DP über das ODER-Glied OR ein Signal zum Laden des Kondensators CZ, das so groß ist, daß das augenblickliche Leitungssignal AS2 beim positiven Grenzwert PGS stehen bleibt.

Durch die Rücknahme der Verstärkung aufgrund des Spannungsanstiegs am Kondensator CZ wird nämlich das Signal AS2 und damit der Ladestrom für den Kondensator CZ zurückgenommen.

Die die Leitungssignale und die Grenzwerte des Ansteuerungsbereichs charakterisierenden Signale AS1, AS2, NGS und PGS werden gemäß Fig. 2 als Spannungen gegen den negativsten Punkt der Schaltungsanordnung SS2, nämlich die Klemme La angegeben. Ebenso ist es jedoch möglich, auf die Verstärkung des steuerbaren Mikrophonverstärkers SMV über eine Stromregelung einzugreifen, wobei dann die charakteristischen Signale für das Leitungssignal und die Grenzwerte des Aussteuerungsbereichs Ströme darstellen müssen.

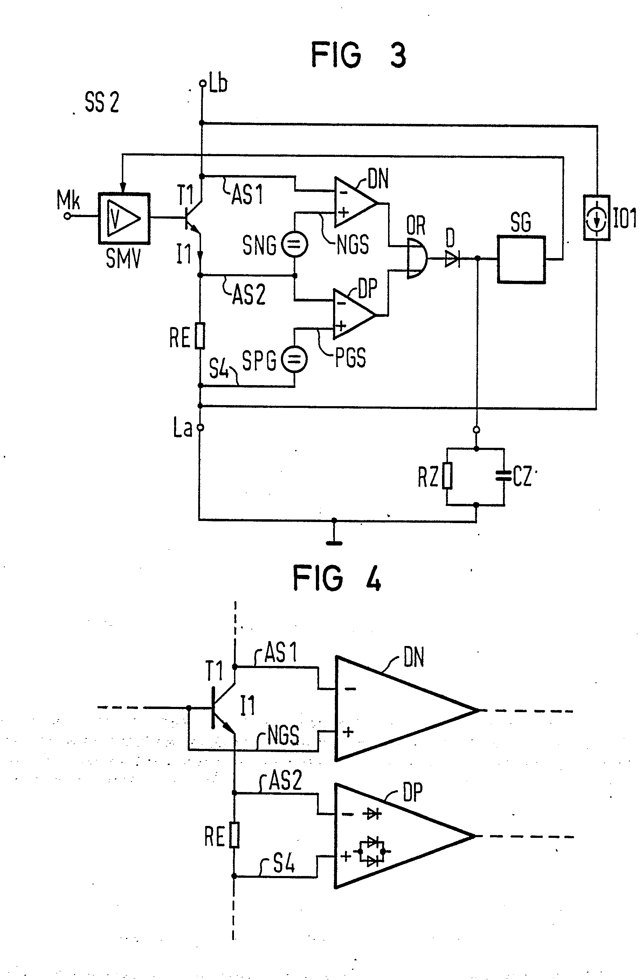

Figur 3 zeigt ein konkretes Ausführungsbeispiel einer erfindungsgemäßen Schaltungsanordnung SS2 gemäß Fig. 2. Gleiche Elemente wie in Figur 2 sind mit gleichen Bezugszeichen versehen. Als Modulationsstromquelle I1 dient ein npn-Transistor T1, der an seiner Basis vom steuerbaren Mikrophonverstärker SMV gesteuert wird und der mit seinem Kollektor mit der Klemme Lb und mit seinem Emitter über den Stromwiderstand mit der Klemme La verbunden ist. RE dient als Mittel zur Erfassung des Modulationsstroms. Am Verbindungspunkt des Kollektors von T1 mit der Klemme Lb wird das Signal AS1 und am Verbindungspunkt des Emitters von T1 und des Widerstands RE das Signal AS2 abgegriffen. Beide Signale werden auf die invertierenden Eingänge der Komparatoren DN und DP gelegt.

Der nichtinvertierende Eingang von DN wird von einer Spannungsquelle SNG mit dem charakteristischen Grenzwertsignal NGS für den negativen Aussteuerungsgrenzwert gespeist. Der Fußpunkt der Spannungsquelle SNG hängt potentialmäßig vom Potential des Emitters von T1 ab und liegt im Beispiel am Verbindungspunkt des Emitters von T1 und des Widerstands RE, d.h. er folgt dem Signal AS2. Der nichtinvertierende Eingang des Komparators DP wird von der Spannungsquelle SPG mit dem charakteristischen Grenzwertsignal PGS für die positive Aussteuerungsgrenze gespeist. Der Fußpunkt der Spannungsquelle SPG mit dem Signal S4 liegt an der Klemme La.

Die Ausgänge der Komparatoren DN und DP sind auf die Eingänge des logischen ODER-Gliedes OR geführt, dessen Ausgang über die Diode D am Eingang eines Stellgliedes SG liegt. Der Ausgang von SG wirkt auf die Verstärkung des steuerbaren Mikrophonverstärkers SMV, die mit Hilfe von SG zwischen einem Normalwert und reduzierten Werten geregelt werden kann. Am Verbindungspunkt der Diode D mit dem Schaltglied SG ist eine Klemme nach außen geführt, an die im Ausführungsbeispiel die Parallelschaltung des Widerstandes RZ und des Kondensators CZ angeschlossen ist.

Auch im Ausführungsbeispiel gemäß Fig. 3 sind die charakteristischen Signale AS1, AS2, NGS und PGS als Spannungen gegen den negativsten Punkt der Schaltung, nämlich die Klemme La ausgeführt. Der Widerstand RE stellt den Stromfühlerwiderstand für den Modulationsstrom I1 dar. Er dient gleichzeitig zur Bildung des momentanen Leitungssignals AS2, das den Modulationsstrom I1 charakterisiert. Das durch die Spannungsquelle SPG erzeugte charakteristische Grenzwertsignal PGS für die positive Aussteuerungsgrenze charakterisiert den minimalen Modulationsstrom I1, bei dem die Sprechschaltungsanordnung SS2 noch ordnungsgemäß arbeitet. Sinkt das augenblickliche Leitungssignal AS2 unter den Wert des Grenzwertsignals PGS, so ist die obere Aussteuerungsgrenze erreicht und der Komparator DP schaltet über die aus den Gliedern OR, D und SG bestehende Regeleinrichtung die Verstärkung des steuerbaren Mikrophonverstärkers SMV zurück.

Das am Kollektor T1 abgegriffene Signal AS1 stellt die momentane Leitungsspannung dar. Sinkt AS1 unter den Wert des Grenzwertsignals NGS, das die minimale Leitungsspannung charakterisiert, bei der die Sprechschaltungsanordnung SS2 noch ordnungsgemäß arbeitet, so ist die untere Aussteuergrenze der Sprechschaltungsanordnung erreicht.

Die minimale Leitungsspannung ist bei der Sprechschaltungsanordnung gemäß Fig. 3 diejenige Leitungsspannung, bei der im Transistor T1 der Sättigungszustand eintritt. Sie ist also leitungsstromabhängig wegen des Spannungsabfalls an RE und wegen der Stromabhängigkeit der Sättigungsspannung des Transistors T1. Im Ausführungsbeispiel gemäß Fig. 3 wird jedoch nur der Leitungsstromabhängigkeit aufgrund von RE Rechnung getragen, indem das Grenzwertsignal NGS die gleiche Abhängigkeit aufweist. Im Ausführungsbeispiel ist das dadurch realisiert, daß das Grenzwertignal NGS mittels der Festspannungsquelle SNG erzeugt wird, die ihren Fußpunkt am Emitter des Transistors T1 hat. Die Stromabhängigkeit der Sättigungsspannung des Transistors T1 ist im Ausführungsbeispiel gemäß Fig. 3 aus Gründen der Übersichtlichkeit nicht eingezeichnet, ihre schaltungstechnische Berücksichtigung ist jedoch dem Fachmann geläufig. Bei Unterschreitung des Werts des momentanen Leitungssignals AS1 unter den Wert des Grenzwertsignals NGS regelt der Komparator DN über die Elemente OR, D und SG die Verstärkung des steuerbaren Mikrophonverstärkers SMV zurück.

Sinkt das Mikrophonsignal wieder auf einen niedrigeren Pegel und erreichen die Signale AS1 und AS2 jeweils wieder niedrigere Werte als die ihnen zugeordneten charakteristischen Signale NGS und PGS, dann schalten die Komparatoren DN oder DP sowie das ODER-Glied OR ausgangsseitig wieder auf den Low-Pegel. Das Umschalten des Schaltgliedes SG bzw. der Verstärkung des steuerbaren Mikrophonverstärkers SMV auf den ursprünglichen Verstärkungswert wird jedoch durch das am Eingang des Schaltgliedes SG liegende Verzögerungsglied aus dem Widerstand RZ und der Kapazität CZ verzögert. Die Zeitdauer der Verzögerung ist über die Wahl der Werte von RZ bzw. CZ einstellbar.

Fig. 4 zeigt in einer detaillierten Teilschaltung der Schaltung nach Fig. 3 eine mögliche Realisation der Spannungsquellen SNG und SPG.

Das Signal AS1 wird am Kollektor des Transistors T1 und das Signal NGS an dessen Basis abgegriffen. Damit hängt das Signal NGS über die Basis-Emitter-Strecke von T1 mit dessen Emitterpotential zusammen. Als Umschaltkriterium für den Komparator DN dient das Erreichen der Sättigung des Transistors T1, wenn die Basis-Emitter-Spannung größer als die Kollektur-Emitter-Spannung von T1 wird.

Die Spannungsquelle SPG ist als eingebauter Offset in den Komparator DP integriert. Der nichtinvestierende Eingang von DP ist dann direkt mit dem Fußpunkt von RE bzw. der Klemme La verbunden. Der Offset für den Komparator DP kann beispielsweise, wie skizziert, durch zwei verschieden dimensionierte Dioden realisiert werden.

## Ansprüche

1. Verfahren zur Verstärkungsregelung für Fernsprechapparate mit elektronischer Sprechschaltung, die eine über insgesamt zwei Leitungsklemmen (La, Lb) an eine Telefonleitung angeschlossene Modulationsstromquelle (l1'T1) und einen Mikrophonverstärker (NV; SMV) enthält, dessen Eingang an einer Mikrophonklemme (Mk) liegt und dessen Ausgang die Modulationsstromquelle (l1; T1) zur Erzeugung eines Leitungssignals steuert, **gekennzeichnet** durch folgende Verfahrensschritte:

a) Von der Modulationsstromquelle (l1; T1) werden Signale (S1 - S4) abgeleitet und in Meßsignale (AS1, AS2) und Grenzwertsignale (NGS, PGS) umgeformt.

b) Jeweils einander zugeordnete Meß-und Grenzwertsignale (AS1, NGS; AS2, PGS) werden miteinander verglichen und

c) abhängig vom Ergebnis des Vergleichs wird die Verstärkung des Mikrophonverstärkers (SmV) geregelt.

2. Verfahren nach Anspruch 1, **dadurch gekennzeichnet**, daß die Meßsignale (AS1, AS2) vom Leitungssignal abgeleitet werden und Strom- oder Spannungs-Meßsignale darstellen.

3. Verfahren nach Anspruch 1 oder 2, **dadurch gekennzeichnet**, daß die Meßsignale (AS1, AS2) vom Strom und der Spannung der Telefonleitung oder von der Ausgangsspannung und dem Ausgangsstrom der Modulationsstromquelle (l1; T1) abgeleitet werden.

4. Verfahren nach Anspruch 1 bis 3, **dadurch gekennzeichnet**, daß die Grenzwertsignale (NGS, TGS) unabhängig von den Aussteuerungsgrenzen der elektronischen Sprechschaltung abgeleitet werden und Grenzwertstrom-oder Grenzwertspannungssignale darstellen.

5. Verfahren nach Anspruch 1 bis 4, **dadurch gekennzeichnet**, daß die Grenzwertsignale (NGS, PGS) abhängig von Strom und /oder Spannung der Telefonleitung als Grenzwertsignale für die obere und untere Aussteuerungsgrenze der elektronischen Sprechschaltung abgeleitet werden.

6. Verfahren nach Anspruch 1 bis 4, **dadurch gekennzeichnet**, daß die Grenzwertsignale (NGS, PGS) als feste Signale für die Aussteuerungsgrenzen der elektronischen Sprechschaltung abgeleitet werden.

7. Verfahren nach Anspruch 1 bis 6, **dadurch gekennzeichnet**, daß die Grenzwertsignale (NGS, PGS) durch feste Spannungsquellen festgelegt werden.

8. Verfahren nach Anspruch 1 bis 7, **dadurch gekennzeichnet**, daß die Verstärkung des Mikrophonverstärkers (SMV) mit Hilfe einer Regeleinrichtung (OR, D, SG, RZ, CZ) reduziert wird, sobald die Meßsignale (AS1, AS2) die jeweils zugeordneten Grenzwertsignale (NGS, PGS) unter -oder überschreiten und umgekehrt.

9. Verfahren nach Anspruch 1 bis 8, **dadurch gekennzeichnet**, daß die Verstärkung des Mikrophonverstärkers (SMV) mit einer Zeitverzögerung (RZ, CZ) erhöht wird, sobald die Meßsignale (AS1, AS2) die jeweils zugeordneten Grenzwertsignale (NGS, PGS) über-oder unterschreiten.

10. Vorrichtung zur Durchführung des Verfahrens nach einem der Ansprüche 1 bis 9, **dadurch gekennzeichnet**, daß Mittel (S1 bis S4, SV1 bis SV4; RE, SNG, SPG) zur Erzeugung der Meßsignale (AS1, AS2) und der Grenzwertsignale (NGS, PGS), eine Vergleichseinrichtung (DN, DP) zum Vergleich dieser Signale (AS1, AS2, NGS, PGS) und eine Regeleinrichtung (OR, D, SG, RZ, CZ) vorgesehen sind, wobei die Regeleinrichtung (OR, D, SG, RZ, CZ) abhängig von der Vergleichseinrichtung (DN, DP) die Verstärkung des Mikrophonverstärkers (SMV) regelt.

11. Vorrichtung nach Anspruch 10, **dadurch gekennzeichnet**, daß die Mittel (S1, S3, SV1, SV3) zur Erzeugung von Meßsignalen (AS1, AS2) das Leitungssignal erfassen und Strom-oder Spannungs-Meßsignale erzeugen.

12. Vorrichtung nach Anspruch 10 oder 11, **dadurch gekennzeichnet**, daß die Mittel (S1, S3, SV1, SV3) zur Erzeugung von Meßsignalen (AS1, AS2) Strom und Spannung der Telefonleitung oder die Ausgangsspannung und den Ausgangsstrom der Modulationsstromquelle (I1, T1) erfassen.

13. Vorrichtung nach Anspruch 10 bis 12, **dadurch gekennzeichnet**, daß die Mittel (S2, S4, SV2, SV4) zur Erzeugung von Grenzwertsignalen (NGS, PGS) von den Aussteuerungs-grenzen der Sprechschaltung abhängige Grenzwertstrom-oder Grenz-wertspannungssignale erzeugen.

14. Vorrichtung nach Anspruch 10 bis 13, **dadurch ge-kennzeichnet**, daß die Mittel (S2, S4, SV2, SV4) zur Erzeugung von Grenzwertsignalen (NGS, PGS) die obere und untere Aussteuerungsgrenze der Sprechschaltungsanordnung abhängig von Strom und/oder Spannung der Telefonleitung festlegen.

15. Vorrichtung nach Anspruch 10 bis 14, **dadurch gekennzeichnet**, daß die Mittel (S2, S4, SV2, SV4) zur Erzeugung von Grenzwertsignalen (NGS, PGS) feste Aussteuerungs-grenzen der Sprechschaltungsanordnung festlegen.

16. Vorrichtung nach Anspruch 10 bis 15, **dadurch gekennzeichnet**, daß die Mittel (S2, S4, SV2, SV4) zur Erzeugung von Grenzwertsignalen (NGS, PGS) feste Spannungsquellen (SNG, SPG) enthalten.

17. Vorrichtung nach Anspruch 10 bis 16, **dadurch gekennzeichnet**, daß die Vergleichseinrichtung (DN, GP) Komparatoren oder Differenzverstärker (DN, DP) enthält, deren Eingänge jeweils mit einem Meßsignal (AS1, AS2) und einem Grenz-wertsignal (NGS, PGS) beaufschlagt sind.

18. Vorrichtung nach Anspruch 10 bis 17, **dadurch gekennzeichnet**, daß die Modulationsstromquelle (I1; T1) einen Transistor enthält, dessen Eingangskreis vom Mikrophonver-stärker (SMV) gesteuert wird, und dessen Ausgangskreis das Leitungssignal bestimmt, und daß die Basis und der Kollektor des Transistors (T1) mit den Eingängen eines Komparators oder Differenzverstärkers (DN) verbunden sind.

19. Vorrichtung nach Anspruch 10 bis 18, **dadurch gekennzeichnet**, daß die Modulationsstromquelle (I1; T1) einen Stromfühlerwiderstand (RE) enthält, dessen Anschlüsse mit den Eingängen eines Komparators oder Differenzverstärkers (DP) verbunden sind, und daß der Komparator oder Differenzverstärker (DP) einen Offset aufweist.

20. Vorrichtung nach Anspruch 10 bis 19, **dadurch gekennzeichnet**, daß die Regeleinrichtung (UR, D, SG, RZ, CZ) eingangsseitig ein logisches Glied (OR), das mit den Ausgängen der Komparatoren oder Differenzverstärker (DN, DP) verbunden ist, und ausgangsseitig ein Stellglied (SG) enthält, daß mit dem logischen Glied (OR) und mit dem Mikrophonverstärker (SMV) verbunden ist.

21. Vorrichtung nach Anspruch 10 bis 20, **dadurch gekennzeichnet**, daß die Regeleinrichtung (OR, D, SG, RZ, TZ) eine Verzögerungsschaltung (D, RZ, CZ) enthält, die zwischen dem logischen Glied (OR) und dem Stellglied (SG) angeordnet ist.

22. Vorrichtung nach Anspruch 10 bis 21, **dadurch gekennzeichnet**, daß die Verzögerungseinrichtung (RZ, CZ) über einen Gleichrichter (D) vom Ausgang des logischen Gliedes (OR) gespeist wird.

# FIG 1

# FIG 2

# FIG 3

# FIG 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | EP-A-0 114 319 (MOTOROLA) <br> * Seite 3, Zeile 3 - Seite 5, Zeile 23; Figur * <br> --- | 1-8,10-17 | H 04 M 1/10 |
| A | DE-A-1 928 671 (PACIFIC PLANTRONICS) <br> * Seite 4, Zeile 14 - Seite 12, Zeile 1; Figur 1 * <br> --- | 1-17,21,22 | |
| A | DE-A-2 638 286 (DASY INTER) <br> * Seite 10, Zeile 9 - Seite 19, Zeile 31; Figuren * <br> --- | 1-17,21,22 | |
| A | EP-A-0 191 619 (NORTHERN TELECOM) <br> * Seite 3, Zeile 20 - Seite 6, Zeile 32; Figuren * <br> ----- | 1-17,21,22 | |

RECHERCHIERTE
SACHGEBIETE (Int. Cl.4)

H 04 M

Der vorliegende Recherchenbericht wurde für alle Patentansprüche erstellt

| Recherchenort | Abschlußdatum der Recherche | Prüfer |
|---|---|---|
| DEN HAAG | 05-01-1988 | KEPPENS P.M.R. |

EPO FORM 1503 03.82 (P0403)